# EUROPEAN PATENT SPECIFICATION

(11) **EP 2 838 243 B1**
(45) Date of publication and mention of the grant of the patent: **31.07.2019**
(21) Application number: 12874122.0
(22) Date of filing: 28.06.2012
(51) Int. Cl.: H04L 29/08, H04L 12/861

(54) **CAPABILITY AGGREGATION AND EXPOSURE METHOD AND SYSTEM**
VERFAHREN UND -SYSTEM FÜR KAPAZITÄTSAGGREGATION UND -DARSTELLUNG
PROCÉDÉ ET SYSTÈME DE PRÉSENTATION ET D'AGRÉGATION DE CAPACITÉS

(30) Priority: 11.04.2012 CN 201210105969
(43) Date of publication of application: 18.02.2015
(73) Proprietor: ZTE Corporation, Shenzhen, Guangdong 518057 (CN)
(72) Inventor: ZHOU, Zhaoyang, Shenzhen Guangdong 518057 (CN)
(74) Representative: AWA Sweden AB
(86) International application number: PCT/CN2012/077715
(87) International publication number: WO 2013/152565

(56) References cited:
- CN-A- 101 090 401
- CN-A- 101 539 932
- CN-A- 101 916 298
- US-A1- 2007 258 486
- US-A1- 2009 222 600
- US-A1- 2009 268 612
- US-B1- 7 844 758
- MILLER B ET AL: "Mapping Salutation Architecture APIs to Bluetooth Service Discovery Layer", BLUETOOTH WHITE PAPER, , vol. 1.C.118/1.0, no. VERSION 1.0 1 July 1999 (1999-07-01), pages 1-26, XP002511956, Retrieved from the Internet: URL:http://www.bluetooth.com/Bluetooth/Tec hnology/Building/Research/Mapping_Salutati on_Architecture_APIs_to_Bluetooth_Service_ Discovery_Layer.htm [retrieved on 2009-01-22]

## Description

### Technical Field

The present invention relates to the field of mobile Internet, and in particular, to a capability aggregation and open method and system.

### Background of the Related Art

In the era when the current communication industry is developed greatly, terminals have an integration trend to make content and application experiences have a uniformity trend, and networks have an integration trend and the focused important areas have been changed from basic communication services to integration information services, from pure voice services and popular data applications to a higher level of services, i.e., diversified, integrated, intelligent and personalized "applications" and "services", which have a variety of forms and a wide coverage. This can not only provide a kind of telecommunication integration business, but also can meet people's needs in terms of lives, entertainment and so on.

Under this trend, the communication industry has absorbed the idea of Web2.0, and puts emphasis on importance of individuals and small groups as an important supplement of enterprise developers participating in application development under a large situation of mobile Internet integration. Ordinary individual users have gradually changed from the application's user role to participants. This not only provides a large number of application consumers but also provides a large number of application creators to the long tail effect.

Throughout the process, from an era of web1.0 when web portals are created, information is exploded, and subsequent search engine companies are popular to an era of web2.0 when the community, web blog, C2C e-commerce are popular, openness, equality, sharing, interaction and innovation become its typical characteristics.

With continuous development of the web2.0 until today, the Internet and mobile terminals are integrated perfectly. This extends the Internet to be possible anytime and anywhere. The mobile network has developed to be IP-based, integrated, and opened, and interpenetrates with the Internet, to extend the Internet from the computer to mobile terminals such as mobile phones etc. and TVs, thereby implementing integration of three screens and interworking of applications. At the same time, the channels have been separated from the applications, resulting in the platform changing from closeness to openness in the application level, and the wall between the mobile network and the Internet being pulled down.

Meanwhile, various concepts and technologies such as the Service-Oriented Architecture and Service-Oriented Computing (SOA/SOC), cloud computing etc, have began to gradually step into the field of telecommunications.

Nowadays, the capability open system processes each new call in a synchronous or asynchronous way. Because of its function merely as a gateway agent, after a request message transmitted by a client is processed either synchronously or asynchronously, a new call needs to be finally initiated to a capability provision device. Targeted anticipation cannot be performed on different types of capabilities, so as to call a capability which meets a condition and automatically generate a service response message. Instead, the service response message must be requested from as server (capability provision device), i.e., for each request of an application, the capability open system will initiate a request to the capability provision device. This way has a low efficiency and a high cost, and cannot support a scenario that an application exceeds a processing capability supported by the capability provision device in a case of presence of bottlenecks in the capability provision device.

Document, XP002511956, has disclosed the related art of the present application.

### Summary of the Invention

The technical problem to be solved by the embodiments of the present invention is to provide a capability aggregation and open method and system, to enhance the response efficiency of the capability aggregation and open system to the capability call. The invention is disclosed in the appended claims.

In order to solve the above technical problem, the embodiments of the present invention provide a capability aggregation and open system, comprising a capability open module, a determination module, a control module and a response cache module, wherein,
the capability open module is configured to receive a capability call request transmitted by a third party, and receive a capability call response from the control module and forward the capability call response to the third party;
the determination module is configured to determine the received capability call request according to a configured rule;
the control module is configured to implement module call control, comprising: calling the determination module, and when response data of the capability call request has been cached, calling the response cache module to acquire cached corresponding capability call response, and returning the capability call response acquired through calling the module to the capability open module; and
the response cache module is configured to acquire the cached corresponding capability call response or cache a capability call response that meets a cache condition according to the call of the control module;
wherein, the system further comprises a capability call processing module, and the control module implementing module call control further comprises: when the response data of the capability call request have not been cached and needs to be further processed, calling the capability call processing module;
the capability call processing module is configured to implement a capability call processing according to the call of the control module;
wherein, the capability call processing module comprises a message queue management sub-module, a capability access sub-module, and one or more message queues, wherein,
the message queue management sub-module is configured to cache the capability call request into the message queue and extract a capability call request to be processed from a corresponding message queue according to the call of the control module; and
the capability access sub-module is configured to adapt and call a corresponding capability provision device according to a current capability call request to be processed.

Preferably, the rule comprises a response data cache condition, and the control module implementing module call control further comprises: if the capability call response returned by the capability call processing module meets the response data cache condition, calling the response cache module to cache the capability call response; and
the response cache module is further configured to a cache capability call response that meets the cache condition according to the call of the control module.

Preferably, the message queue has a queue attribute comprising a processing priority, a Service Level Agreement (SLA) level or a corresponding capability category, the configured rule further comprises a capability request enqueue rule, and the control module is configured to call the message queue management sub-module to cache the capability call request into a message queue with a corresponding queue attribute according to the capability request enqueue rule.

Alternatively, the configured rule further comprises a capability request dequeue rule, and the control module is configured to call the message queue management sub-module to extract the capability call request to be processed from a corresponding message queue according to the capability request dequeue rule.

The capability request dequeue rule comprises a number of capability call requests to be dequeued, and the number is proportional to a traffic capability of the corresponding capability provision device.

Preferably, the response cache module is further configured to delete the capability call response when the cached capability call response is failed.

Alternatively, the response data cache condition comprises one of the following conditions: insensitivity of the response data to time; insensitivity of the response data in a specified time period; and insensitivity of the response data to data consumers.

Alternatively, the system further comprises: a capability arrangement module and an external function call module, wherein,
the capability arrangement module is configured to logically arrange a capability to be called and related support functions to generate a capability package, wherein the support functions comprises authentication, authorization or accounting;
the external function call module is configured to initiate a corresponding support function processing request to a support function unit according to the call of the control module; and
the control module is configured to implement module call control according to a capability package associated with the capability call request received by the capability open module;
preferably, wherein, the capability arrangement module is further configured to perform mashup on two or more capabilities of different types to generate a comprehensive capability, and the capability call request comprises a capability call request for the comprehensive capability; and the capability access sub-module is configured to call a capability provision device corresponding to two or more capabilities generating the comprehensive capability.

Alternatively, the control module is further configured to return a response representing a capability call failure to the capability open module when the capability call request does not meet the capability call rule or strategy.

In order to solve the above technical problem, the embodiments of the present invention further provide a capability aggregation and open method implemented by a capability aggregation and open system, comprising:
a capability call request reception step of receiving a capability call request transmitted by a third party;
a capability call request determination step of determining the received capability call request according to a configured rule, and proceeding to perform a cache response call step when it is determined that response data of the capability call request has been cached;
the cache response call step of acquiring the cached capability call response and proceeding to perform a capability call response step; and
the capability call request response step of returning the capability call response to the third party;
wherein, in the capability call request determination step, when it is determined that response data of the capability call request have not been cached and needs to be further processed, the capability call step is performed to acquire a capability call response, and the procedure proceeds to perform the capability call request response step;
wherein, the capability aggregation and open system comprises one or more message queues, and the capability call step comprises:
   an enqueue step of caching the capability call request into the message queue;
   a dequeue step of extracting a capability call request to be processed from a corresponding message queue; and
   a call step of adapting and calling a corresponding capability provision device according to a current capability call request to be processed.

Alternatively,
Preferably, the rule comprises a response data cache condition, and after performing the capability call step, the method further comprises a response cache management step of determining whether the acquired capability call response meets the response data cache condition, and caching the acquired capability call response when the response data cache condition is met.

In the method and system according to the embodiments of the present invention, with the use of the cached capability call response, the difficulty of the application calling the telecommunication network capability, IT network capability and database content information capability can be reduced, the efficiency can be enhanced, and the aggregation and open of the telecommunication network capability, IT network capability and database content information capability can be maximized. In addition, by the message queue and Service-Level Agreement (SLA) strategy mechanism, the aggregated and exposed pipeline is intelligentized to achieve the value of the telecommunication network capability to the maximum extent, and the IP network capability and database content information capability are further aggregated, and mashup of the single capability and other types of capabilities is performed, which provides capability open with different granularities, and secondary value-added of existing capabilities is implemented. At the same time, the application per se can also be encapsulated to access the system while the application provides services to a final user. The system also exposes the application as a basic capability using a Web service/Rest protocol for call by other applications, which enhances the reusability of the application, largely enhances the development efficiency, and creates more value for the application at the same time.

More importantly, the present system uses a cloud computing technology to solve the problems of storage bottlenecks, performance bottlenecks, disaster recovery backup, quality of service and security faced up in the process of capability open and reduces the power consumption at the same time, which is green and environmental protection. Wherein, the introduction of distributed storage technology of the cloud computing technology can enable the capability open system to store the service response message acquired previously by the client from the capability provision device through the capability open system, so that when the client or other client initiates a request for a service again in an effective time, the capability open system needs not to initiate a new call request to the capability provision device again, and instead, the capability open system queries and returns a response from the service information stored in the capability open system. As such type of service response message may be structured data or unstructured data, there exist defects for a consistent and traditional storage mode in terms of storage capacity, storage scalability and performance. The above problems can be effectively solved by the distributed storage technology.

At the same time, the specific basic characteristics of cloud computing of the distributed storage technology per se has features such as disaster recovery, security, low power consumption, and green and environmental protection.

### Brief Description of Drawings

Fig. 1 is a modular structural diagram of a capability aggregation and open system according to an embodiment of the present invention;
Fig. 2 is a diagram of a relationship between a capability aggregation and open system and peripheral systems according to an embodiment of the present invention;
Fig. 3 is a flowchart of a capability aggregation and open method according to an embodiment of the present invention;
Fig. 4 is a flowchart of new capability access configuration according to an embodiment of the present invention; and
Fig. 5 is a flowchart of a capability aggregation and open method in conjunction with modules in Fig. 1.

### Preferred Embodiments of the Present Invention

Embodiments of the present invention will be described in detail below in conjunction with accompanying drawings. It should be illustrated that, in the case of no conflict, the embodiments of the present application and the features in the embodiments could be combined randomly with each other.

The capability described in the embodiments of the present invention refers to that multiple Application Programming Interfaces (APIs) are related when implementing the same one function. For example, the map provision capability of Google (if Google map is to be used, it needs to use multiple APIs of the map. In order to visualize and simplify the description in the industry, multiple APIs being related when implementing the same one function is collectively referred to as one capability). The system described in the embodiments of the present invention can integrate the Google map capability, the weather forecast capability etc. and make the capabilities open to a third party (such as an application) for call.

### Embodiment one

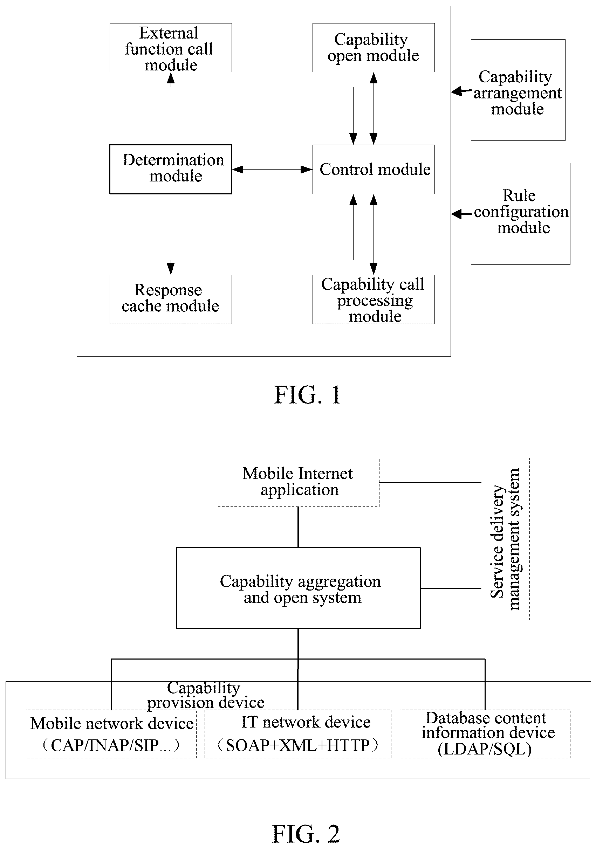

The present embodiment describes a capability aggregation and open system based on a cloud computing technology. As shown in Fig. 1, the capability aggregation and open system comprises a capability arrangement module, a rule configuration module, a capability open module, a control module, a determination module, a capability call processing module, a response cache module, an external function call module, the eight modules of which cooperate with each other to complete capability aggregation and open, wherein,
the capability arrangement module is optional, and is configured to provide development and logical arrangement before access of a new capability, and arrange the required control and process logic into the whole capability package. At the same time, the capability arrangement module is further preferably configured to provide mashup of different types of capabilities, to create a capability with a new function and a different granularity.

Mashup of different capabilities refers to performing secondary development (i.e., the so-called mashup) on two or more capabilities according to requirements when an application scenario is used, to create a comprehensive capability (which internally includes multiple capabilities). Then the application only needs to call capabilities once from the system, without calling capabilities many times successively. It can be understood that when the system calls capability provision devices, it needs to call capability provision devices corresponding to two or more capabilities generating the comprehensive capability.

In the embodiment of the present invention, in order to cooperate other support function units (for example, authentication, authorization or accounting) at the same time when the system call for capabilities (one or more APIs), the present system integrates call processes of related support functions into the whole procedure of the capability API call, and the capability arrangement module logically arranges the capabilities to be called and related support functions, to form an enhanced capability for an increased logic of the capability, i.e., a capability package. If authentication and accounting will be implemented in the capability call process, it relates to interaction with a BSS/OSS system of an existing network of a operator. Such interaction procedure and logic also implement arrangement of logic to be interacted into a capability package through the capability arrangement module.

The rule configuration module is optional, and is configured to provide a rule setting during open of the capability, and implement additional control functions during use of the capability.

The rule described in the embodiments of the present invention includes a third party call capability limitation rule, a response data cache condition, a capability request enqueue rule, a capability request dequeue rule etc., wherein,
the third party (for example, an application) call capability limitation rule may include one or more of the following rules:
1. traffic size limitation rule for each application call capability;
2. total message amount limitation rule for each application call capability;
3. a region which can be served by each application;
4. a time period when each application calls capability (for example, disallowance of use during weekends, or disallowance of use in a certain break time period, or allowance of use in a certain particular time); and
5. provision of a certain capability to only some particular users for use when a certain application calls the capability etc.;
the response data cache condition comprises: insensitivity of the response data to time; insensitivity of the response data in a specified time period; or insensitivity of the response data to data consumers.

The capability open module is responsible for uniformly exposing accessed capabilities in the system (for example, a telecommunication network capability, an IT network capability, or a database content information capability) via different protocol interfaces (such as Web service, Restful or Native) to a third party application, and can dynamically access a new capability and dynamically install an accessed capability. The "dynamically" described in the present invention refers to that various capabilities are independent from each other, and it needs not pause the present system when a new capability is accessed (integrated) into the present system or installed from the present system, which will not influence open of other existing capabilities.

Specifically, the capability open module is configured to receive a capability call request transmitted by a third party, and receive a capability call response from a capability reception module and forward the capability call response to the third party. Preferably, the capability open module comprises multiple protocol interfaces, to interact with third parties of different protocol types.

The capability comprises a telecommunication network capability, an Internet capability, an Information Technology (IT) capability, an Internet of things capability or a data information capability.

The control module is configured to implement module call control according to a capability packet associated with the capability call request received by the capability open module, comprising: calling the determination module, and when response data of the capability call request has been cached, calling a response cache module to acquire cached corresponding capability call response, and when response data of the capability call request has not been cached and needs to be further processed, calling the capability call processing module; returning the capability call response acquired through calling the module to the capability open module; and if the capability call response returned by the capability call processing module meets the response data cache condition, calling the response cache module to cache the capability call response.

The determination module is configured to determine the received capability call request according to a configured rule, to determine whether to acquire a service response message from the response cache module, or initiate a call request to the capability reception module. The rule comprises a response data cache condition;
preferably, the control module is further configured to return a response representing a capability call failure to the capability open module when the capability call request does not meet the capability call rule or strategy.

The response cache module is configured to cache a capability call response that meets a cache condition, and acquire the cached corresponding capability call response or cache a capability call response that meets a cache condition according to the call of the control module.

The response cache module stores the data needed to be cached onto multiple storage nodes in a distributed way by using the distributed cache technology, for example, storing the same data onto three storage nodes. This solves the problem in the existing capability open system that the increase in the read/write performance is slow when the data is cached, the data loss can not be ensured effectively, and the capacity can not be expanded in a hot-loaded way.

The response cache module implements selection of a master node and management of a slave node in multiple storage nodes through cooperation, to cooperate various storage nodes to receive cache of the message.

With the configuration, whether the capability call response data is needed to be stored in the response cache module is defined, and only the capability call response data complying with the configuration can be cached into the response cache module. The configuration principle comprises: insensitivity of the response data to time; insensitivity of the response data in a specified time period; and insensitivity of the response data to different data consumers.

Preferably, the response cache module is further configured to delete the capability call response when the cached capability call response is failed.

The data stored in a cache space carries a validity attribute when being stored, and when the validity is expired, the requirements are failed automatically, and the failed historical data is cleared automatically by a timing task of the response cache module.

The capability call processing module is configured to implement a capability call process according to the call of the control module.

The capability call processing module comprises a message queue management sub-module, a capability access sub-module, and one or more message queues, wherein,
the message queue management sub-module is configured to cache the capability call request into the message queue and extract a capability call request to be processed from a corresponding message queue according to the call of the control module; and
the capability access sub-module is configured to adapt and call a corresponding capability provision device according to the current capability call request to be processed.

The message queue has a queue attribute comprising a processing priority, a Service Level Agreement (SLA) level or a corresponding capability category, and the configured rule further comprises a capability request enqueue rule, and the control module is configured to call the message queue management sub-module to cache the capability call request into a message queue with a corresponding queue attribute according to the capability request enqueue rule.

The queues are grouped, and each group is a queue pool. Each queue pool has a particular queue attribute (for example, a corresponding capability and a priority type), for distinguishing different queue pools.

Specifically, for different messages, a level of each message needed to be stored in a queue is determined by calculating the SLA strategy and priority rule thereof, and a queue pool to which each message belongs is acquired in conjunction with the attribute of each queue pool to enqueue the message.

The configured rule further comprises a capability request dequeue rule, and the control module is configured to call the message queue management sub-module to extract the capability call request to be processed from a corresponding message queue according to the capability request dequeue rule.

The capability request dequeue rule comprises a number of capability call requests to be dequeued, and the number is proportional to a traffic capability of the corresponding capability provision device.

The control module is configured to manage dequeue and enqueue of a capability request according to a traffic process capability of the capability provision device with a hierarchical multi-queue pool mechanism, to ensure an ordered message management and efficient enqueue and dequeue in the queue.

The external function call module is configured to initiate a corresponding support function processing request to a support function unit according to the call of the control module.

The present system implements resilient scalability of computing resources and storage resources by being deployed on a virtualized environment to cooperate with a cloud computing management unit external to the system.

The cloud computing management unit will monitor the consumption condition of the physical resources (such as CPU, memory etc.) on the virtual machine where the system is located in real time. When the consumption percentage of the physical resources on the virtual machine exceeds a set highest threshold, the cloud computing management unit will schedule new resources (i.e., "stretch") for the system to generate a new virtual machine, so as to share the traffic load of the existing virtual machine where the system is located. When the cloud computing management unit will monitor in real time that on some virtual machines where the system is located, the consumption percentage of the physical resources is lower than a set minimum threshold, one or more virtual machines are destroyed, so that the computation condition of the physical resources of the various virtual machines where the system is located is in a range which is not wasteful and supports applications.

Fig. 2 is a diagram of a relationship between the above capability aggregation and open system and peripheral systems. The capability aggregation and open system accesses capabilities provided by various capability provision devices in the south direction, so as to perform complex protocol abstraction, and exposes capabilities to mobile and Internet applications in the north direction, and at the same time, interacts authentication and accounting request message related to partners and applications with the service delivery management system in the east direction.

The system according to the embodiments of the present invention aggregates the telecommunication network capability, Internet capability, IT capability, and data information capability, uniformly accesses these capabilities, and then abstracts these capabilities; exposes the accessed capabilities to the application side via different protocol interfaces (Web service/Restful/Native) to be selected and called by the application side, and manages and controls the application side when it calls the capabilities, provides a high-speed data cache capability at the same time, and can extend the cache space and cache capability call data online, which can largely enhance efficiency of the response to the application side, avoids the problem that it needs to initiate a call request to the capability provision device when existing capability open related product receives the capability call request from the application each time, solves the bottlenecks of the capability open throughput in the existing product scheme, and solves the bottlenecks of throughput of the capability provision device; provides a capability queue and a flexible SLA and queue serving mechanism, which solves the problem in the existing product scheme that applications of different partners can not be provided with personalized serving level control, and achieves enhancing the capability open mode from extensive open to intelligent open by providing the elaborate services, and further implements resilient scalability of the computing resources and storage resources of the system based on the virtualized and distributed architecture by the cloud computing technology, which solves the problem in the existing product scheme that the requirements such as minimum hardware investment, minimum power consumption and support of peak traffic etc. can not be met. With the present system, a giant capability resource pool with various capabilities can be provided to the application side, and becomes a capability open platform with strong commercial and earning values.

### Embodiment two

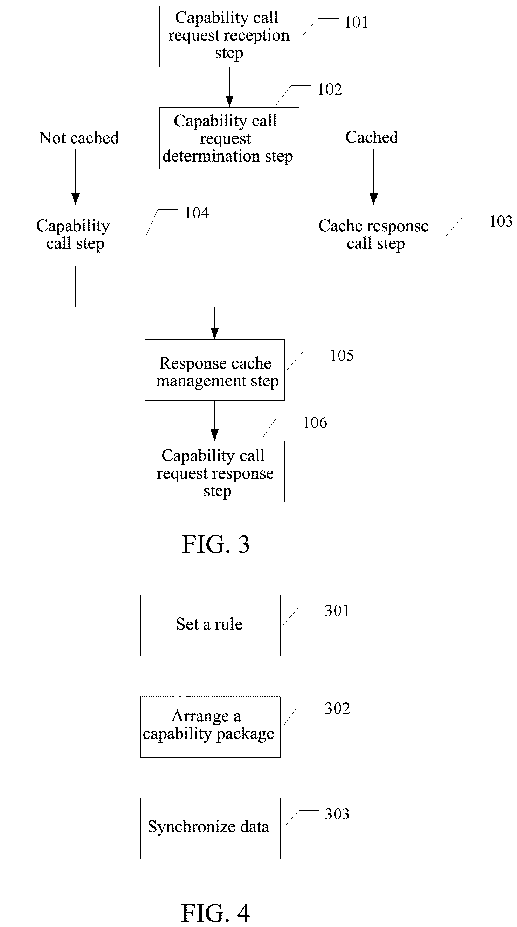

The capability aggregation and open method according to the embodiments of the present invention is implemented by a capability aggregation and open system. As shown in Fig. 3, the method comprises the following steps.

In step 101, i.e., a capability call request reception step, a capability call request transmitted by a third party is received.

Specifically, the step is implemented by a capability open module, and the system comprises multiple protocol interfaces to interact with third parties of different protocol types.

In step 102, i.e., a capability call request determination step, the received capability call request is determined according to a configured rule, which comprises a response data cache condition, and when it is determined that response data of the capability call request has been cached, the procedure proceeds to perform a cache response call step; and when it is determined that response data of the capability call request has not been cached and needs to be further processed, the capability call step will be performed.

In the capability call request determination step, the control module call determination module to implement determination of the capability call request, and when it is determined that the capability call request does not comply with a capability call rule or strategy, returns a response representing a capability call failure to the third party.

In step 103, i.e., a cache response call step, the cached capability call response is acquired and the procedure proceeds to perform a capability call response step; and

The step is implemented by the response cache module according to the call of the control module.

In step 104, i.e., a capability call step, the capability call is performed and a capability call response is acquired.

The step 104 is implemented by the capability call processing step according to the call of the control module. The capability aggregation and open system comprises one or more message queues, and the capability call step comprises the following steps.

In step 1041, i.e., an enqueue step, the capability call request is cached into the message queue.

The message queue has a queue attribute comprising a processing priority, a Service Level Agreement (SLA) level or a corresponding capability category, and the configured rule further comprises a capability request enqueue rule, and in the enqueue step, the capability call request is cached into a message queue with a corresponding queue attribute according to the capability request enqueue rule.

In step 1042, i.e., a dequeue step, a capability call request to be processed is extracted from a corresponding message queue.

The configured rule further comprises a capability request dequeue rule, and in the dequeue step, the capability call request to be processed is extracted from a corresponding message queue according to the capability request dequeue rule; and the capability request dequeue rule comprises a number of capability call requests to be dequeued, and the number is proportional to a traffic capability of the corresponding capability provision device.

The steps 1041 and 1042 are implemented by the message queue management sub-module.

In step 1043, i.e., a call step, a corresponding capability provision device is adapted and called according to the current capability call request to be processed.

The step 1043 is implemented by the capability access sub-module.

In step 105, i.e., a response cache management step, it is determined whether the acquired capability call response meets the response data cache condition, and the acquired capability call response is cached when the response data cache condition is met.

The response data cache condition comprises one of the following conditions: insensitivity of the response data to time; insensitivity of the response data in a specified time period; and insensitivity of the response data to data consumers.

The capability aggregation and open system deletes the capability call response when the cached capability call response is failed.

The step 105 is implemented by the control of the control module.

In step 106, i.e., a capability call request response step, the capability call response is returned to the third party.

Preferably, the system is responsible for logically arranging a capability to be called and related support functions to generate a capability package, wherein the support functions comprises authentication, authorization or accounting; before or after the capability call step, the method further comprises an external function call step, in which a corresponding support function processing request is initiated to the support function unit according to the capability package associated with the received capability call request.

As described above, the capability according to the present invention comprises a telecommunication network capability, an Internet capability, an Information Technology (IT) capability, an Internet of things capability or a data information capability.

### Embodiment three

The present embodiment describes the configuration procedure for a new accessed capability. As shown in Fig. 4, the procedure comprises the following steps.

In step 301, when it needs to newly access a capability, a corresponding rule is set. The specific rule comprises a third party call capability limitation rule, a response data cache condition, a capability request enqueue rule, a capability request dequeue rule etc..

The step 301 may be implemented by a rule configuration module.

In step 302, development and logical arrangement are performed before accessing a new capability, and the required control and process logic and the set rule are arranged into the whole capability package.

For example, an interface needed to call a determination module is arranged into the capability package, so as to ensure in the procedure that the determination module can be called by a client when calling a capability, so that the determination module performs determination according to the set rule.

In step 303, data synchronization is performed, comprising making the configured rule to the determination module, the control module and the capability call processing module, and synchronizing the capability package to the control module.

### Embodiment four

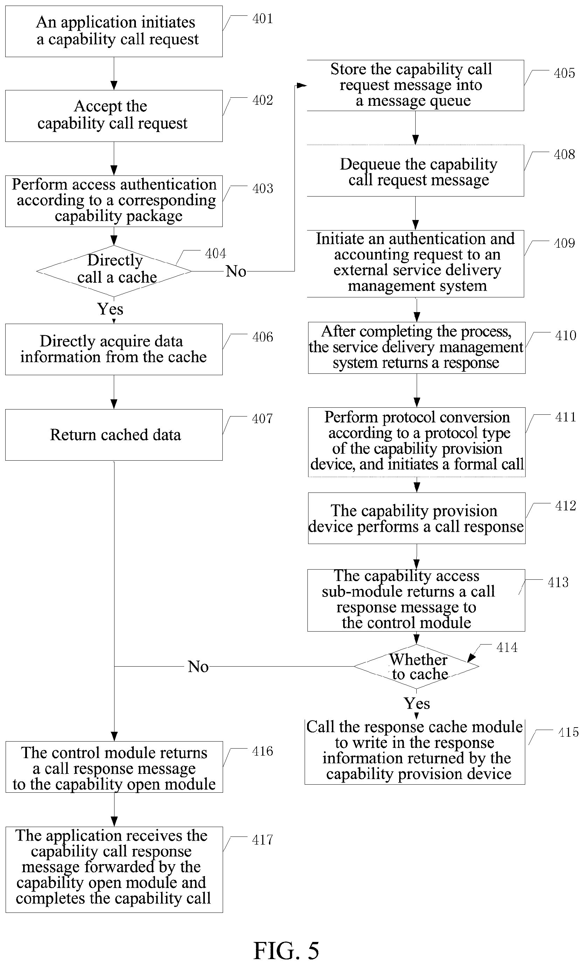

The present embodiment describes a procedure of processing a capability call request in conjunction with specific module results. As shown in Fig. 5, the procedure comprises the following steps.

In step 104, an application initiates a capability call request;
in step 402, a capability open module accepts the capability call request of the application;
in step 403, a control module calls an external function call module according to a corresponding capability package to perform access authentication (authentication of a key or a token etc.), to ensure that it is a capability call request initiated by a legal application, and then transmits a request message to a determination module;
in step 404, the determination module determines the capability call request according to the configured rule based on the call of the control module, and if the capability call message can be called directly from the response cache module, the control module calls the response cache module to perform step 406, and if a flow control queue is needed, the control module calls the capability call processing module to perform step 405;
in step 405, a message queue management sub-module of the capability call processing module stores the capability call request message into a message queue according to an enqueue rule, the message queue receives a newly enqueued request message, and performs queuing management on the request messages in the original queue, and the procedure proceeds to step 408;

The branch of the procedure is based on a flow control reason. Flow control queuing refers to that a request message needs to be stored into a queue for queuing so as to implement flow control due to existence of bottlenecks in the capability provision device.

There is a connection between the message queue management sub-module and the message queue module. The message queue is a logical queue entity, but the data in the queue is physically stored into a cache.

In step 406, a response cache module directly acquires data information from a cache.

The branch of the procedure is determined by the attribute of the capability call. As long as the response data of the capability call is insensitive to the time or is insensitive in a specified time period and the response data is insensitive to different data consumers, the data information can be acquired directly from the cache, without transmitting a new capability call request to the capability provision device.

For example, when different applications or the same application queries for the same map at different times, the response cache module returns the previous cached map information to the application(s), which omits the subsequent procedure and the call of the capability provision device (may be Google), and enhances the efficiency. Or with respect to a request from an application for a weather forecast query of the same city in the same time period, the information cached in the response cache module is returned directly to the application when the system returns the previous query by determining the validity of the time;

Further, the weather forecast information is taken as an example. When a user A queries for the weather forecast information by using an application, the application calls the weather forecast capability of the system, and then the system calls the weather forecast capability (i.e., interface) provided by Google (capability provision device) to find the weather of Beijing on November 11, 2011. The weather information of Beijing on November 11, 2011 is insensitive in one hour, and a result found by a user B using the application is the same as that found by the user A (it is insensitive to data consumers). Therefore, after the user A finds the weather of Beijing on that day and the user B also queries for the weather in one hour, the system needs not to query using Google (capability provision device), and instead, directly finds the previous query result from the distributed response cache.

In step 407, the response cache module returns cached data to the control module, and after the return is successfully, step 416 will be performed;
in step 408, the message queue management sub-module controls dequeue of a capability call request message according to a preset rule, and step 409 will be performed;
in step 409, the control module calls the external function call module to initiate an authentication and accounting request to an external service delivery management system.

The capability generally will not be freely provided to an application or a user using the application for use. Therefore, in a normal condition, it needs to perform authentication and accounting on the call of the capability.

In step 410, after completing the process (performing authentication process and accounting on a partner (developer) and an application), the service delivery management system returns a response;
in step 411, the capability access sub-module performs protocol conversion for the dequeued capability call request according to a protocol type of the capability provision device, and initiates a formal call.

The order of steps 409 and 411 is not strictly limited.

As the system integrates different capabilities provided by different capability provision devices, when an application initiates a capability call request to call a particular capability, the capability access sub-module needs to perform protocol adaption according to the capability called by the application, and after the protocol adaption process completes, the capability access sub-module routes it to a corresponding capability provision device.

In step 412, the capability provision device performs a call response, and returns message data;
in step 413, the capability access sub-module returns a call response message to the control module;
in step 414, the control module determines whether the acquired call response message needs to be cached according to a preset rule, and when it needs to be cached, the procedure proceeds to step 415; otherwise, the procedure proceeds to perform step 416.

When the response data of the capability call is insensitive to the time or is insensitive in a specified time period and the response data is insensitive to different data consumers, it needs to be cached.

In step 415, the control module calls the response cache module to write in the response information returned by the capability provision device;.

In step 416, the control module returns a call response message to the capability open module.

In step 417, the application receives the capability call response messge forwarded by the capability open module and completes the capability call.

In another alternative scheme of the capability aggregation and open system and method according to the embodiments of the present invention, processing can be made only on the capability call request of which the capability call response is pre-cached, and also the capability call request can be quickly reacted and processed.

The cloud based computing technology provided by the embodiments of the present invention implements the capability aggregation and open method and system, which solves the difficulty of an application calling the telecommunication network capability, Internet capability, Information Technology (IT) technology (including network of things capability) and data information capability, establishes a systematized aggregation and open system platform for maximizing the open of the telecommunication network capability, Internet capability, IT capability and data information capability, and achieving the values of the telecommunication network capability, Internet capability, IT capability and data information capability and provides an intelligent control function to a single pipeline with exposed capabilities. This can avoid the mobile Internet developer from pipelining the telecommunication operators, creates more new types of application forms by mashup and secondary open of multiple types of capabilities when exploiting potentialities of the telecommunication operators, enhances the innovative space and increases the competitiveness of the telecommunication operators.

More importantly, the present system uses a cloud computing technology to reduce the power consumption, and solve the problems of performance bottlenecks, disaster recovery backup, quality of service and security generated in the process of capability open.

A person having ordinary skill in the art can understand that all or a part of steps in the above method can be implemented by programs instructing related hardware, which can be stored in a computer readable storage medium, such as a read-only memory, a disk or a disc etc. Alternatively, all or a part of steps in the above embodiments can also be implemented by one or more integrated circuits. Accordingly, each module/unit in the above embodiments can be implemented in the form of hardware, or can also be implemented in the form of software functional module. The present invention is not limited to any particular form of a combination of hardware and software.

Of course, the present invention can have a plurality of other embodiments. Without departing from the substance of the present invention, those skilled in the art can make various corresponding changes and variations according to the present invention, and all these corresponding changes and variations should belong to the protection scope of the appended claims in the present invention.

### Industrial Applicability

In the method and system according to the embodiments of the present invention, with the use of the cached capability call response, the difficulty of the application calling the telecommunication network capability, IT network capability and database content information capability can be reduced, the efficiency can be enhanced, and the aggregation and open of the telecommunication network capability, IT network capability and database content information capability can be maximized.

## Claims

1. A capability aggregation and open system, **characterized by** comprising a capability open module, a determination module, a control module and a response cache module, wherein the capability refers to that multiple Application Programming Interfaces, APIs, are related when implementing the same one function and wherein said multiple APIs being related when implementing the same one function is collectively referred to as one capability;
wherein, the capability open module is configured to receive a capability call request transmitted by a third party, and receive a capability call response from the control module and forward the capability call response to the third party;
the determination module is configured to determine the received capability call request according to a configured rule, and to determine whether to acquire the capability call response message from the response cache module;
the control module is configured to implement module call control, comprising: calling the determination module, and when response data of the capability call request have been cached, calling the response cache module to acquire cached corresponding capability call response, and returning the capability call response acquired by calling the response cache module module to the capability open module; and
the response cache module is configured to acquire the cached corresponding capability call response or cache a capability call response that meets a cache condition according to the call of the control module;
wherein, the system further comprises a capability call processing module, and the control module implementing module call control further comprises: when the response data of the capability call request have not been cached and needs to be further processed, calling the capability call processing module;
the capability call processing module is configured to implement a capability call processing according to the call of the control module, so as to call a corresponding capability provision device according to a current capability call request to be processed transmitted by the third party, and receive the response data from the capability provision device;
wherein, the capability call processing module comprises a message queue management sub-module, a capability access sub-module, and one or more message queues, wherein,
the message queue management sub-module is configured to cache, according to the configuration rule, the capability call request into the message queue and extract a capability call request to be processed from a corresponding message queue according to the call of the control module; and
the capability access sub-module is configured to adapt and call the corresponding capability provision device according to the current capability call request to be processed.

2. The system according to claim 1, wherein,
the rule comprises a response data cache condition, and the control module implementing module call control further comprises: if the capability call response returned by the capability call processing module meets the response data cache condition, calling the response cache module to cache the capability call response; and
the response cache module is further configured to cache capability call response that meets the cache condition according to the call of the control module.

3. The system according to claim 1, wherein, the message queue has a queue attribute comprising a processing priority, a Service Level Agreement, SLA, level or a corresponding capability category, the configured rule further comprises a capability request enqueue rule, and the control module is configured to call the message queue management sub-module to cache the capability call request into a message queue with a corresponding queue attribute according to the capability request enqueue rule.

4. The system according to claim 1, wherein, the configured rule further comprises a capability request dequeue rule, and the control module is configured to call the message queue management sub-module to extract the capability call request to be processed from a corresponding message queue according to the capability request dequeue rule.

5. The system according to claim 4, wherein, the capability request dequeue rule comprises a number of capability call requests to be dequeued, and the number is proportional to a traffic capability of the corresponding capability provision device.

6. The system according to claim 1, wherein, the response cache module is further configured to delete the capability call response when the cached capability call response is failed.

7. The system according to claim 2, wherein, the response data cache condition comprises one of following conditions: insensitivity of the response data to time; insensitivity of the response data in a specified time period; and insensitivity of the response data to data consumers.

8. The system according to claim 1, further comprising: a capability arrangement module and an external function call module, wherein,
the capability arrangement module is configured to logically arrange a capability to be called and related support functions to generate a capability package, wherein the support functions comprises authentication, authorization or accounting;
the external function call module is configured to initiate a corresponding support function processing request to a support function unit according to the call of the control module; and
the control module is configured to implement module call control according to a capability package associated with the capability call request received by the capability open module;
preferably, wherein, the capability arrangement module is further configured to perform mashup on multiple capabilities of different types to generate a comprehensive capability, and the capability call request comprises a capability call request for the comprehensive capability; and the capability access sub-module is configured to call capability provision devices corresponding to multiple capabilities generating the comprehensive capability.

9. The system according to claim 1, wherein,
the capability comprises a telecommunication network capability, an Internet capability, an Information Technology, IT, capability, an Internet of things capability or a data information capability;
or, the capability open module comprises multiple protocol interfaces, to interact with third parties of different protocol types;
or, the control module is further configured to return a response representing a capability call failure to the capability open module when the capability call request does not meet a capability call rule or strategy.

10. A capability aggregation and open method implemented by a capability aggregation and open system, the method being **characterized by** comprising:
a capability call request reception step (101) of receiving a capability call request transmitted by a third party, wherein the capability refers to that multiple Application Programming Interfaces, APIs, are related when implementing the same one function and wherein said multiple APIs being related when implementing the same one function is collectively referred to as one capability;
a capability call request determination step (102) of determining the received capability call request according to a configured rule, and proceeding to perform a cache response call step (103) when it is determined that response data of the capability call request have been cached;
the cache response call step (103) of acquiring the cached capability call response or cache a capability call response that meets a cache condition and proceeding to perform a capability call request response step (106); and
the capability call request response step (106) of returning the capability call response to the third party;
wherein, in the capability call request determination step (103), when it is determined that response data of the capability call request have not been cached and needs to be further processed, the capability call step (104) is performed to call a corresponding capability provision device according to a current capability call request to be processed transmitted by the third party, and receive the response data from the capability provision device, and the procedure proceeds to perform the capability call request response step (106);
wherein, the capability aggregation and open system comprises one or more message queues, and the capability call step (104) comprises:
an enqueue step (405) of caching, according to the configuration rule, the capability call request into the message queue;
a dequeue step (408) of extracting, according to the configuration rule, a capability call request to be processed from a corresponding message queue; and
a call step (409 to 411) of adapting and calling the corresponding capability provision device according to the current capability call request to be processed.

11. The method according to claim 10, wherein, the message queue has a queue attribute comprising a processing priority, a Service Level Agreement, SLA, level or a corresponding capability category, and the configured rule further comprises a capability request enqueue rule, and in the enqueue step, the capability call request is cached into a message queue with a corresponding queue attribute according to the capability request enqueue rule;
or,
wherein, the configured rule further comprises a capability request dequeue rule, and in the dequeue step, the capability call request to be processed is extracted from a corresponding message queue according to the capability request dequeue rule; and the capability request dequeue rule comprises a number of capability call requests to be dequeued, and the number is proportional to a traffic capability of the corresponding capability provision device.

12. The method according to claim 10, wherein, the rule comprises a response data cache condition, and after performing the capability call step (104), the method further comprises a response cache management step (105) of determining whether the acquired capability call response meets the response data cache condition, and caching the acquired capability call response when the response data cache condition is met;
preferably, wherein, the response data cache condition comprises one of the following conditions: insensitivity of the response data to time; insensitivity of the response data in a specified time period; and insensitivity of the response data to data consumers.

13. The method according to claim 10, wherein, the capability aggregation and open system deletes the capability call response when the cached capability call response is failed.

## Patentansprüche

1. Fähigkeitenaggregations- und -offenheitssystem, **dadurch gekennzeichnet, dass** es ein Fähigkeitenoffenheitsmodul, ein Bestimmungsmodul, ein Steuerungsmodul und ein Antwortcache-Modul umfasst, wobei sich die Fähigkeit darauf bezieht, dass mehrere Anwendungsprogrammierschnittstellen (Application Programming Interfaces, APIs) miteinander in Beziehung stehen, wenn dieselbe eine Funktion implementiert wird, und wobei der Umstand, dass die mehreren APIs miteinander in Beziehung stehen, wenn dieselbe eine Funktion implementiert wird, gemeinsam als "Eine Fähigkeit" bezeichnet wird;
wobei:
das Fähigkeitenoffenheitsmodul dafür konfiguriert ist, eine Fähigkeitenaufrufanforderung zu empfangen, die durch einen Dritten gesendet wird, und eine Fähigkeitenaufrufantwort von dem Steuerungsmodul zu empfangen und die Fähigkeitenaufrufantwort an den Dritten weiterzuleiten;
das Bestimmungsmodul dafür konfiguriert ist, die empfangene Fähigkeitenaufrufanforderung gemäß einer konfigurierten Regel zu bestimmen, und zu bestimmen, ob die Fähigkeitenaufrufantwortnachricht aus dem Antwortcache-Modul eingeholt werden soll;
das Steuerungsmodul dafür konfiguriert ist, eine Modulaufrufsteuerung zu implementieren, die umfasst, das Bestimmungsmodul anzurufen, und wenn Antwortdaten der Fähigkeitenaufrufanforderung cachegespeichert wurden, das Antwortcache-Modul aufzufordern, die cachegespeicherte entsprechende Fähigkeitenaufrufantwort einzuholen, und die durch das Anrufen des Antwortcache-Moduls eingeholte Fähigkeitenaufrufantwort an das Fähigkeitenoffenheitsmodul zurückzusenden; und
das Antwortcache-Modul dafür konfiguriert ist, die cachegespeicherte entsprechende Fähigkeitenaufrufantwort einzuholen oder eine Fähigkeitenaufrufantwort cachezuspeichern, die eine Cache-Bedingung gemäß dem Aufruf des Steuerungsmoduls erfüllt;
wobei das System des Weiteren ein Fähigkeitenaufruf-Verarbeitungsmodul umfasst, und das Implementieren der Modulaufrufsteuerung durch das Steuerungsmodul des Weiteren Folgendes umfasst: wenn die Antwortdaten der Fähigkeitenaufrufanforderung nicht cachegespeichert wurden und weiterverarbeitet werden müssen, Anrufen des Fähigkeitenaufruf-Verarbeitungsmoduls;
das Fähigkeitenaufruf-Verarbeitungsmodul dafür konfiguriert ist, eine Fähigkeitenaufrufverarbeitung gemäß dem Aufruf des Steuerungsmoduls zu implementieren, um eine entsprechende Fähigkeitenbereitstellungsvorrichtung gemäß einer zu verarbeitenden momentanen Fähigkeitenaufrufanforderung aufzurufen, die durch den Dritten gesendet wurde, und die Antwortdaten von der Fähigkeitenbereitstellungsvorrichtung zu empfangen;
wobei das Fähigkeitenaufruf-Verarbeitungsmodul ein Nachrichtenwarteschlangenmanagement-Untermodul, ein Fähigkeitenzugriffs-Untermodul und eine oder mehrere Nachrichtenwarteschlangen umfasst, wobei
das Nachrichtenwarteschlangenmanagement-Untermodul dafür konfiguriert ist, gemäß der Konfigurationsregel die Fähigkeitenaufrufanforderung in der Nachrichtenwarteschlange cachezuspeichern und eine zu verarbeitende Fähigkeitenaufrufanforderung aus einer entsprechenden Nachrichtenwarteschlange gemäß dem Aufruf des Steuerungsmoduls zu extrahieren; und
das Fähigkeitenzugriffs-Untermodul dafür konfiguriert ist, die entsprechende Fähigkeitenbereitstellungsvorrichtung gemäß der zu verarbeitenden momentanen Fähigkeitenaufrufanforderung zu adaptieren und anzurufen.

2. System nach Anspruch 1, wobei
die Regel eine Antwortdaten-Cache-Bedingung umfasst, und wobei das Implementieren der Modulaufrufsteuerung durch das Steuerungsmodul des Weiteren Folgendes umfasst: wenn die durch das Fähigkeitenaufruf-Verarbeitungsmodul zurückgesendete Fähigkeitenaufrufantwort die Antwortdaten-Cache-Bedingung erfüllt, Auffordern des Antwortcache-Moduls, die Fähigkeitenaufrufantwort cachezuspeichern; und
das Antwortcache-Modul des Weiteren dafür konfiguriert ist, die Fähigkeitenaufrufantwort cachezuspeichern, die die Cache-Bedingung gemäß dem Aufruf des Steuerungsmoduls erfüllt.

3. System nach Anspruch 1, wobei die Nachrichtenwarteschlange ein Warteschlangenattribut hat, das eine Verarbeitungspriorität, eine Service Level Agreement (SLA)-Stufe oder eine entsprechende Fähigkeitenkategorie umfasst, wobei die konfigurierte Regel des Weiteren eine Fähigkeitenanforderungs-Warteschlangeneinreihungsregel umfasst, und das Steuerungsmodul dafür konfiguriert ist, das Nachrichtenwarteschlangenmanagement-Untermodul aufzufordern, die Fähigkeitenaufrufanforderung in einer Nachrichtenwarteschlange mit einem entsprechenden Warteschlangenattribut gemäß der Fähigkeitenanforderungs-Warteschlangeneinreihungsregel cachezuspeichern.

4. System nach Anspruch 1, wobei die konfigurierte Regel des Weiteren eine Fähigkeitenanforderungs-Warteschlangenausreihungsregel umfasst, und das Steuerungsmodul dafür konfiguriert ist, das Nachrichtenwarteschlangenmanagement-Untermodul aufzufordern, die zu verarbeitende Fähigkeitenaufrufanforderung aus einer entsprechenden Nachrichtenwarteschlange gemäß der Fähigkeitenanforderungs-Warteschlangenausreihungsregel zu extrahieren.

5. System nach Anspruch 4, wobei die Fähigkeitenanforderungs-Warteschlangenausreihungsregel eine Anzahl von Fähigkeitenaufrufanforderungen umfasst, die aus der Warteschlange auszureihen sind, und die Anzahl proportional zu einer Verkehrsfähigkeit der entsprechenden Fähigkeitenbereitstellungsvorrichtung ist.

6. System nach Anspruch 1, wobei das Antwortcache-Modul des Weiteren dafür konfiguriert ist, die Fähigkeitenaufrufantwort zu löschen, wenn die cachegespeicherte Fähigkeitenaufrufantwort fehlschlägt.

7. System nach Anspruch 2, wobei die Antwortdaten-Cache-Bedingung eine der folgenden Bedingungen umfasst: Zeit-Unempfindlichkeit der Antwortdaten; Unempfindlichkeit der Antwortdaten in einem spezifizierten Zeitraum; und Unempfindlichkeit der Antwortdaten gegenüber Datenverbrauchern.

8. System nach Anspruch 1, das des Weiteren ein Fähigkeiten-Arrangierungsmodul und ein externes Funktionsaufrufmodul umfasst, wobei das Fähigkeiten-Arrangierungsmodul dafür konfiguriert ist, eine aufzurufende Fähigkeit und zugehörige Unterstützungsfunktionen logisch zu arrangieren, um ein Fähigkeitenpaket zu generieren, wobei die Unterstützungsfunktionen Authentifizierung, Autorisierung oder Abrechnung umfassen;
das externe Funktionsaufrufmodul dafür konfiguriert ist, eine entsprechende Unterstützungsfunktionsverarbeitungsanforderung für eine Unterstützungsfunktionseinheit gemäß dem Aufruf des Steuerungsmoduls zu initiieren; und
das Steuerungsmodul dafür konfiguriert ist, eine Modulaufrufsteuerung gemäß einem Fähigkeitenpaket zu implementieren, das mit der durch das Fähigkeitenoffenheitsmodul empfangenen Fähigkeitenaufrufanforderung verknüpft ist;
wobei vorzugsweise das Fähigkeiten-Arrangierungsmodul des Weiteren dafür konfiguriert ist, ein Mashup an mehreren Fähigkeiten verschiedener Art auszuführen, um eine vollständige Fähigkeit zu generieren, und die Fähigkeitenaufrufanforderung eine Fähigkeitenaufrufanforderung für die vollständige Fähigkeit umfasst; und das Fähigkeitenzugriffs-Untermodul dafür konfiguriert ist, Fähigkeitenbereitstellungsvorrichtungen aufzurufen, die mehreren Fähigkeiten entsprechen, die die vollständige Fähigkeit generieren.

9. System nach Anspruch 1, wobei
die Fähigkeit eine Telekommunikationsnetzfähigkeit, eine Internet-Fähigkeit, eine Informationstechnologie (IT)-Fähigkeit, eine Internet-of-Things-Fähigkeit oder eine Dateninformationsfähigkeit umfasst; oder
das Fähigkeitenoffenheitsmodul mehrere Protokollschnittstellen umfasst, um mit Dritten von verschiedenen Protokollarten zu interagieren; oder
das Steuerungsmodul des Weiteren dafür konfiguriert ist, eine Antwort, die einen Fähigkeitenaufruf-Fehlschlag darstellt, an das Fähigkeitenoffenheitsmodul zurückzusenden, wenn die Fähigkeitenaufrufanforderung eine Fähigkeitenaufrufregel oder -strategie nicht erfüllt.

10. Fähigkeitenaggregations- und -offenheitsverfahren, das durch ein Fähigkeitenaggregations- und -offenheitssystem implementiert wird, wobei das Verfahren **dadurch gekennzeichnet ist, dass** es Folgendes umfasst:
einen Fähigkeitenaufrufanforderungs-Empfangsschritt (101) des Empfangens einer Fähigkeitenaufrufanforderung, die durch einen Dritten gesendet wird, wobei sich die Fähigkeit darauf bezieht, dass mehrere Anwendungsprogrammierschnittstellen (Application Programming Interfaces, APIs) miteinander in Beziehung stehen, wenn dieselbe eine Funktion implementiert wird, und wobei der Umstand, dass die mehreren APIs miteinander in Beziehung stehen, wenn dieselbe eine Funktion implementiert wird, gemeinsam als "Eine Fähigkeit" bezeichnet wird;
einen Fähigkeitenaufrufanforderungs-Bestimmungsschritt (102) des Bestimmens der empfangenen Fähigkeitenaufrufanforderung gemäß einer konfigurierten Regel, und des weiteren Ausführens eines Cache-Antwortaufruf-Schrittes (103), wenn bestimmt wird, dass Antwortdaten der Fähigkeitenaufrufanforderung cachegespeichert wurden;
einen Cache-Antwortaufruf-Schritt (103) des Einholens der cachegespeicherten Fähigkeitenaufrufantwort oder des Cache-Speicherns einer Fähigkeitenaufrufantwort, die eine Cache-Bedingung erfüllt, und des weiteren Ausführens eines Fähigkeitenaufrufanforderungsantwort-Schrittes (106); und
einen Fähigkeitenaufrufanforderungsantwort-Schritt (106) des Zurückzusendens der Fähigkeitenaufrufantwort an den Dritten;
wobei, wenn in dem Fähigkeitenaufrufanforderungs-Bestimmungsschritt (103) bestimmt wird, dass Antwortdaten der Fähigkeitenaufrufanforderung nicht cachegespeichert wurden und weiterverarbeitet werden müssen, der Fähigkeitenaufruf-Schritt (104) ausgeführt wird, um eine entsprechende Fähigkeitenbereitstellungsvorrichtung gemäß einer zu verarbeitenden momentanen Fähigkeitenaufrufanforderung aufzurufen, die durch den Dritten gesendet wurde, und die Antwortdaten von der Fähigkeitenbereitstellungsvorrichtung zu empfangen, und das Verfahren zum Ausführen des Fähigkeitenaufrufanforderungsantwort-Schrittes (106) übergeht;
wobei das Fähigkeitenaggregations- und -offenheitssystem eine oder mehrere Nachrichtenwarteschlangen umfasst, und der Fähigkeitenaufruf-Schritt (104) Folgendes umfasst:
einen Warteschlangeneinreihungsschritt (405) des Cache-Speicherns, gemäß der Konfigurationsregel, der Fähigkeitenaufrufanforderung in der Nachrichtenwarteschlange;
einen Warteschlangenausreihungsschritt (408) des Extrahierens, gemäß der Konfigurationsregel, einer zu verarbeitenden Fähigkeitenaufrufanforderung aus einer entsprechenden Nachrichtenwarteschlange; und
einen Aufruf-Schritt (409 bis 411) des Adaptierens und Aufrufens der entsprechenden Fähigkeitenbereitstellungsvorrichtung gemäß der zu verarbeitenden momentanen Fähigkeitenaufrufanforderung.

11. Verfahren nach Anspruch 10, wobei die Nachrichtenwarteschlange ein Warteschlangenattribut hat, das eine Verarbeitungspriorität, eine Service Level Agreement (SLA)-Stufe oder eine entsprechende Fähigkeitenkategorie umfasst, und die konfigurierte Regel des Weiteren eine Fähigkeitenanforderungs-Warteschlangeneinreihungsregel umfasst, und - in dem Warteschlangeneinreihungsschritt - die Fähigkeitenaufrufanforderung in einer Nachrichtenwarteschlange mit einem entsprechenden Warteschlangenattribut gemäß der Fähigkeitenanforderungs-Warteschlangeneinreihungsregel cachegespeichert wird; oder
wobei die konfigurierte Regel des Weiteren eine Fähigkeitenanforderungs-Warteschlangenausreihungsregel umfasst, und - in dem Warteschlangenausreihungsschritt - die zu verarbeitende Fähigkeitenaufrufanforderung aus einer entsprechenden Nachrichtenwarteschlange gemäß der Fähigkeitenanforderungs-Warteschlangenausreihungsregel extrahiert wird; und die Fähigkeitenanforderungs-Warteschlangenausreihungsregel eine Anzahl von Fähigkeitenaufrufanforderungen umfasst, die aus der Warteschlange auszureihen sind, und die Anzahl proportional zu einer Verkehrsfähigkeit der entsprechenden Fähigkeitenbereitstellungsvorrichtung ist.

12. Verfahren nach Anspruch 10, wobei die Regel eine Antwortdaten-Cache-Bedingung umfasst, und das Verfahren nach dem Ausführen des Fähigkeitenaufruf-Schrittes (104) des Weiteren einen Antwort-Cache-Managementschritt (105) umfasst, der bestimmt, ob die eingeholte Fähigkeitenaufrufantwort die Antwortdaten-Cache-Bedingung erfüllt, und die eingeholte Fähigkeitenaufrufantwort cachespeichert, wenn die Antwortdaten-Cache-Bedingung erfüllt ist;
wobei vorzugsweise die Antwortdaten-Cache-Bedingung eine der folgenden Bedingungen umfasst: Zeit-Unempfindlichkeit der Antwortdaten; Unempfindlichkeit der Antwortdaten in einem spezifizierten Zeitraum; und Unempfindlichkeit der Antwortdaten gegenüber Datenverbrauchern.

13. Verfahren nach Anspruch 10, wobei das Fähigkeitenaggregations- und -offenheitssystem die Fähigkeitenaufrufantwort löscht, wenn die cachegespeicherte Fähigkeitenaufrufantwort fehlschlägt.

## Revendications

1. Système d'agrégation et d'ouverture de capacité, **caractérisé en ce qu'**il comprend un module d'ouverture de capacité, un module de détermination, un module de commande et un module de mise en mémoire cache de réponse, dans lequel la capacité fait référence à ce que de multiples interfaces de programmation d'application, API, sont liées lors de la mise en oeuvre de la même fonction et dans lequel il est collectivement fait référence auxdites multiples API qui sont liées lors de la mise en oeuvre de la même fonction en tant qu'une capacité ;
dans lequel
le module d'ouverture de capacité est configuré pour la réception d'une demande d'appel de capacité transmise par un tiers, la réception d'une réponse d'appel de capacité en provenance du module de commande et le transfert de la réponse d'appel de capacité au tiers ;
le module de détermination est configuré pour la détermination de la demande d'appel de capacité reçue en fonction d'une règle configurée, et la détermination s'il faut acquérir le message de réponse d'appel de capacité auprès du module de mise en mémoire cache de réponse ;
le module de commande est configuré pour la mise en oeuvre d'une commande d'appel de module, comprenant : l'appel du module de détermination, et, lorsque des données de réponse de la demande d'appel de capacité ont été mises en mémoire cache, l'appel du module de mise en mémoire cache de réponse pour acquérir une réponse d'appel de capacité correspondante mise en mémoire cache, et le retour de la réponse d'appel de capacité acquise par l'appel du module de mise en mémoire cache de réponse au module d'ouverture de capacité ; et
le module de mise en mémoire cache de réponse est configuré pour l'acquisition de la réponse d'appel de capacité correspondante mise en mémoire cache ou la mise en mémoire cache d'une réponse d'appel de capacité conforme à une condition de mise en mémoire cache en fonction de l'appel du module de commande ;
dans lequel le système comprend en outre un module de traitement d'appel de capacité, et le module de commande mettant en oeuvre une commande d'appel de module comprend en outre : lorsque les données de réponse de la demande d'appel de capacité n'ont pas été mises en mémoire cache et doivent être traitées davantage, l'appel du module de traitement d'appel de capacité ;
le module de traitement d'appel de capacité est configuré pour la mise en oeuvre d'un traitement d'appel de capacité en fonction de l'appel du module de commande, de manière à appeler un dispositif de fourniture de capacité correspondant en fonction d'une demande d'appel de capacité actuelle à traiter transmise par le tiers, et la réception des données de réponse en provenance du dispositif de fourniture de capacité ;
dans lequel le module de traitement d'appel de capacité comprend un sous-module de gestion de file d'attente de messages, un sous-module d'accès de capacité, et une ou plusieurs files d'attente de messages, dans lequel le sous-module de gestion de file d'attente de messages est configuré pour la mise en mémoire cache, en fonction de la règle de configuration, de la demande d'appel de capacité dans la file d'attente de messages et l'extraction d'une demande d'appel de capacité à traiter d'une file d'attente de messages correspondante en fonction de l'appel du module de commande ;
et
le sous-module d'accès de capacité est configuré pour l'adaptation et l'appel du dispositif de fourniture de capacité correspondant en fonction de la demande d'appel de capacité actuelle à traiter.

2. Système selon la revendication 1, dans lequel
la règle comprend une condition de mise en mémoire cache de données de réponse, et le module de commande mettant en oeuvre une commande d'appel de module comprend en outre : si la réponse d'appel de capacité retournée par le module de traitement d'appel de capacité est conforme à la condition de mise en mémoire cache de données de réponse, l'appel du module de mise en mémoire cache de réponse pour mettre en mémoire cache la réponse d'appel de capacité ; et
le module de mise en mémoire cache de réponse est en outre configuré pour la mise en mémoire cache d'une réponse d'appel de capacité conforme à la condition de mise en mémoire cache en fonction de l'appel du module de commande.

3. Système selon la revendication 1, dans lequel la file d'attente de messages a un attribut de file d'attente comprenant une priorité de traitement, un niveau d'accord de niveau de service, SLA, ou une catégorie de capacité correspondante, la règle configurée comprend en outre une règle de mise en file d'attente de demandes de capacité, et le module de commande est configuré pour appeler le sous-module de gestion de file d'attente de messages pour mettre en mémoire cache la demande d'appel de capacité dans une file d'attente de messages avec un attribut de file d'attente correspondant en fonction de la règle de mise en file d'attente de demandes de capacité.

4. Système selon la revendication 1, dans lequel la règle configurée comprend en outre une règle de sortie de file d'attente de demandes de capacité, et le module de commande est configuré pour appeler le sous-module de gestion de file d'attente de messages pour extraire la demande d'appel de capacité à traiter d'une file d'attente de messages correspondante en fonction de la règle de sortie de file d'attente de demandes de capacité.

5. Système selon la revendication 4, dans lequel la règle de sortie de file d'attente de demandes de capacité comprend un nombre de demandes d'appel de capacité à sortir de la file d'attente, et le nombre est proportionnel à une capacité de trafic du dispositif de fourniture de capacité correspondant.

6. Système selon la revendication 1, dans lequel le module de mémoire cache de réponse est en outre configuré pour la suppression de la réponse d'appel de capacité lorsque la réponse d'appel de capacité mise en mémoire cache est un échec.

7. Système selon la revendication 2, dans lequel la condition de mise en mémoire cache de données de réponse comprend l'une des conditions suivantes : l'insensibilité des données de réponse au temps ; l'insensibilité des données de réponse dans une période de temps spécifiée ; et l'insensibilité des données de réponse à des consommateurs de données.

8. Système selon la revendication 1, comprenant en outre : un module d'agencement de capacité et un module d'appel de fonction externe, dans lequel
le module d'agencement de capacité est configuré pour l'agencement logique d'une capacité à appeler et de fonctions de prise en charge associées pour la génération d'un ensemble de capacité, dans lequel les fonctions de prise en charge comprennent l'authentification, l'autorisation ou la comptabilité ;
le module d'appel de fonction externe est configuré pour lancer une demande de traitement de fonction de prise en charge correspondante à une unité de fonction de prise en charge en fonction de l'appel du module de commande ; et
le module de commande est configuré pour la mise en oeuvre d'une commande d'appel de module en fonction d'un ensemble de capacité associé à la demande d'appel de capacité reçue par le module d'ouverture de capacité ;
de préférence dans lequel le module d'agencement de capacité est en outre configuré pour effectuer la combinaison de multiples capacités de différents types pour la génération d'une capacité complète, et la demande d'appel de capacité comprend une demande d'appel de capacité pour la capacité complète ; et le sous-module d'accès de capacité est configuré pour appeler des dispositifs de fourniture de capacité correspondant à de multiples capacités générant la capacité complète.

9. Système selon la revendication 1, dans lequel
la capacité comprend une capacité de réseau de télécommunications, une capacité Internet, une capacité informatique, IT, une capacité d'Internet des objets, ou une capacité d'informations de données ;
ou le module d'ouverture de capacité comprend de multiples interfaces de protocole pour l'interaction avec des tiers de différents types de protocole ; ou le module de commande est en outre configuré pour retourner une réponse représentant un échec d'appel de capacité au module d'ouverture de capacité lorsque la demande d'appel de capacité n'est pas conforme à une règle ou à une stratégie d'appel de capacité.

10. Procédé d'agrégation et d'ouverture de capacité mis en oeuvre par un système d'agrégation et d'ouverture de capacité, le procédé étant **caractérisé en ce qu'**il comprend :
une étape de réception de demande d'appel de capacité (101) pour la réception d'une demande d'appel de capacité transmise par un tiers, dans lequel la capacité fait référence à ce que de multiples interfaces de programmation d'application, API, sont liées lors de la mise en oeuvre de la même fonction et dans lequel il est collectivement fait référence auxdites multiples API qui sont liées lors de la mise en oeuvre de la même fonction en tant qu'une capacité ;
une étape de détermination de demande d'appel de capacité (102) pour la détermination de la demande d'appel de capacité reçue en fonction d'une règle configurée, et la poursuite avec l'exécution d'une étape d'appel de réponse de mémoire cache (103) lorsqu'il est déterminé que des données de réponse de la demande d'appel de capacité ont été mises en mémoire cache ;
l'étape de l'appel de réponse de mémoire cache (103) pour l'acquisition de la réponse d'appel de capacité mise en mémoire cache ou la mise en mémoire cache d'une réponse d'appel de capacité conforme à une condition de mise en mémoire cache, et la poursuite avec l'exécution d'une étape de réponse de demande d'appel de capacité (106) ; et
l'étape de la réponse de demande d'appel de capacité (106) pour le retour de la réponse d'appel de capacité au tiers ;
dans lequel, à l'étape de détermination de demande d'appel de capacité (103), lorsqu'il est déterminé que des données de réponse de la demande d'appel de capacité n'ont pas été mises en mémoire cache et doivent être traitées davantage, l'étape de l'appel de capacité (104) est effectuée pour l'appel d'un dispositif de fourniture de capacité correspondant en fonction d'une demande d'appel de capacité actuelle à traiter transmise par le tiers, et
la réception des données de réponse en provenance du dispositif de fourniture de capacité, et la procédure se poursuit avec l'exécution de l'étape de la réponse de demande d'appel de capacité (106) ;
dans lequel le système d'agrégation et d'ouverture de capacité comprend une ou plusieurs files d'attente de message, et l'étape de l'appel de capacité (104) comprend :
une étape de mise en file d'attente (405) pour la mise en mémoire cache, en fonction de la règle de configuration, de la demande d'appel de capacité dans la file d'attente de messages ;
une étape de sortie de file d'attente (408) pour l'extraction, en fonction de la règle de configuration, de la demande d'appel de capacité à traiter d'une file d'attente de messages correspondante ; et
une étape d'appel (409 à 411) pour l'adaptation et l'appel du dispositif de fourniture de capacité correspondant en fonction de la demande d'appel de capacité actuelle à traiter.

11. Procédé selon la revendication 10, dans lequel la file d'attente de messages a un attribut de file d'attente comprenant une priorité de traitement, un niveau d'accord de niveau de service, SLA, ou une catégorie de capacité correspondante, et la règle configurée comprend en outre une règle de mise en file d'attente de demandes de capacité, et, à l'étape de la mise en file d'attente, la demande d'appel de capacité est mise en file d'attente dans une file d'attente de messages avec un attribut de file d'attente correspondant en fonction de la règle de mise en file d'attente de demandes de capacité ;
ou
dans lequel la règle configurée comprend en outre une règle de sortie de file d'attente de demandes de capacité, et, à l'étape de sortie de file d'attente, la demande d'appel de capacité à traiter est extraite d'une file d'attente de messages correspondante en fonction de la règle de sortie de file d'attente de demandes de capacité ; et la règle de sortie de file d'attente de demandes de capacité comprend un nombre de demandes d'appel de capacité à sortir de la file d'attente, et le nombre est proportionnel à une capacité de trafic du dispositif de fourniture de capacité correspondant.

12. Procédé selon la revendication 10, dans lequel la règle comprend une condition de mise en mémoire cache de données de réponse et, après l'exécution de l'étape d'appel de capacité (104), le procédé comprend en outre une étape de gestion de mémoire cache de réponse (105) pour la détermination si la réponse d'appel de capacité acquise est conforme à la condition de mise en mémoire cache de données de réponse, et la mise en mémoire cache de la réponse d'appel de capacité acquise lors de la conformité à la condition de mise en mémoire cache de données de réponse ; de préférence dans lequel la condition de mise en mémoire cache de données de réponse comprend l'une des conditions suivantes : l'insensibilité des données de réponse au temps ; l'insensibilité des données de réponse dans une période de temps spécifiée ; et l'insensibilité des données de réponse à des consommateurs de données.

13. Procédé selon la revendication 10, dans lequel le système d'agrégation et d'ouverture de capacité supprime la réponse d'appel de capacité lorsque la réponse d'appel de capacité mise en mémoire cache est un échec.
